# EUROPÄISCHE PATENTSCHRIFT

(11) **EP 2 524 419 B1**
(45) Veröffentlichungstag und Bekanntmachung des Hinweises auf die Patenterteilung: **06.11.2019**
(21) Anmeldenummer: 11702923.1
(22) Anmeldetag: 13.01.2011
(51) Int. Cl.: H02J 1/10, G05F 1/56

(54) **REDUNDANZMODUL MIT SYMMETRISCHEN STROMPFADEN**
REDUNDANT MODULE WITH SYMMETRICAL CURRENT PATHS
MODULE REDONDANT COMPRENANT DES TRAJETS DE COURANT SYMÉTRIQUES

(30) Priorität: 13.01.2010 DE 102010004644
(43) Veröffentlichungstag der Anmeldung: 21.11.2012
(60) Teilanmeldung: 16167396.7
(73) Patentinhaber: Phoenix Contact GmbH & Co. KG, 32825 Blomberg (DE)
(72) Erfinder: HENKEL, Hartmut, 32825 Blomberg (DE); HEINEMANN, Michael, 32791 Lage (DE); NEUENDORF, Andreas, 32839 Steinheim (DE)
(74) Vertreter: Herden, Andreas F.
(86) Internationale Anmeldenummer: PCT/EP2011/000111
(87) Internationale Veröffentlichungsnummer: WO 2011/085980

(56) Entgegenhaltungen:
- WO-A2-2007/140203
- DE-C1- 19 722 127
- US-A- 4 618 779
- US-A- 5 672 958
- US-A1- 2005 078 424
- US-A1- 2009 322 156
- US-B1- 6 181 117
- US-B1- 6 483 682

## Beschreibung

Die vorliegende Erfindung betrifft ein Redundanzmodul zur Entkopplung von Kurzschlussströmen in einer redundanten Spannungsversorgung.

In elektrischen Anlagen, Maschinen und Geräten, an die hohe Anforderungen bezüglich Verfügbarkeit und Ausfallsicherheit gestellt werden, sind zum Beispiel für Steuerungs- und sicherheitsrelevante Funktionen redundante Spannungsversorgungen bereitgestellt. Diese Redundanz wird beispielsweise durch wenigstens zwei gekoppelte Netzteile gewährleistet, die im Parallelbetrieb die jeweiligen Einrichtungen versorgen. Die Ausgangsleistung der einzelnen Netzteile ist dabei so bemessen, dass zumindest beim Ausfall eines der Netzteile die benötigte elektrische Leistung durch die restlichen Netzteile weiterhin bereitgestellt wird.

Die parallel geschalteten Netzteile sind Ausgangsseitig zu einem gemeinsamen Stromknoten geführt, von dem aus die gesamte bereitgestellte elektrische Leistung an jeweilige Verbraucher einer Anlage, einer Maschine oder eines Geräts verteilt wird. Damit der gemeinsame Stromknoten bei einem ausgangsseitigen Kurzschluss in einem der Netzteile, der in Folge eines Defekts in dem Netzteil auftreten könnte, nicht durch den resultierenden Kurzschlussstrom belastet werden kann, ist es erforderlich, die Netzteile für diesen Fall voneinander zu entkoppeln. In der Regel werden hierfür sogenannte Redundanzmodule verwendet, die für jedes der parallel zuschaltenden Netzteile einen separaten Eingang bereitstellen, wobei jeder dieser Eingänge über eine Entkopplungsdiode auf einen gemeinsamen Ausgang geführt ist. Eine solche auch als O-Ringschaltung bekannte Schaltung entkoppelt ein kurzgeschlossenes Netzteil von dem gemeinsamen Stromknoten am Ausgang des Redundanzmoduls, in den alle parallelen Netzteile ihren Ausgangsstrom im Normalbetrieb einspeisen. Fällt z.B. die Ausgangsspannung eines Netzteils im Kurzschlussfall auf Nullpotential ab, so entsteht zwischen dem zugehörigen Eingang und dem Stromknoten am Ausgang des Redundanzmoduls ein negativer Spannungsabfall, so dass die Entkopplungsdiode einen möglichen Kursschlussstrom sperrt.

Damit Entkopplungsdioden im normalen Betreib eine möglichst geringe Verlustleistung erzeugen, werden in einem Redundanzmodul in der Regel Schottky-Dioden verwendet, die sich durch eine geringe Durchlassspannung in der Größe von etwa 400 mV auszeichnen. Entsprechende Redundanzmodule sind auch in Form sogenannter O-Ring-Dioden als integrierte Bauelemente bekannt.

Aus der US 2005/078424 A1 ist eine redundante Stromversorgung mit mehreren Stromquellen bekannt, wobei ein Fehlerfall betreffend eine Überspannung einer der Stromquellen betrachtet wird.

Aus der US 5 672 958 A ist ein Rückkopplungs-Erfassungssystem zur Steuerung der Leistung an einer Last in einem redundanten Stromversorgungssystem mit mehreren Stromversorgungen bekannt.

Aus der WO 2007/140203 A ist ein System mit mehreren Stromquellen für eine medizinische Vorrichtung bekannt.

Nachteilig bei den bekannten Redundanzmodulen ist, dass die parallelbetriebenen redundanten Netzteile beim Einspeisen in den gemeinsamen Stromknoten ungleichmäßig stark belastet werden, wodurch sich die Lebensdauer einzelner Netzteile verkürzt. Ein weiterer Nachteil bekannter Redundanzmodule ist, dass die Funktionsfähigkeit der Entkopplungsdioden und das Vorhandensein der Redundanz nicht überwacht werden kann.

Der Erfindung liegt die Aufgabe zugrunde, eine redundante Spannungsversorgung mit wenigstens zwei Netzteilen bereitzustellen, mit der die Verfügbarkeit von Anlagen, Maschinen oder Geräten signifikant erhöht wird und mit der insbesondere die oben genannten Nachteile vermieden werden.

Zur Lösung dieser Aufgabe schlägt die vorliegende Erfindung ein Redundanzmodul zur Entkopplung von Kurzschlussströmen in einer redundanten Spannungsversorgung mit wenigsten zwei Netzteilen vor.

Das Redundanzmodul weist eine der Anzahl von Eingängen auf, die wenigstens der Anzahl der Netzteile entspricht, und eine Steuerungs- und Regelungseinrichtung.

Die Eingänge sind jeweils über einen separaten Strompfad auf einen gemeinsamen Stromknoten eines Ausgangs geführt zum Bereitstellen eines Ausgangstromes.

Jeder der Strompfade bildet eine Entkopplungsstrecke, der wenigstens ein Messelement zum Messen der Eingangsspannung und eines durch den Strompfad fließenden Pfadstroms sowie ein als ein steuerbares Halbleiterbauelement ausgebildetes Stellglied zur Regulierung von Spannung, und/oder Pfadstrom der Entkopplungsstrecke zugeordnet sind.

Die Steuerungs- und Regelungseinrichtung ist dazu ausgebildet, einen Kurzschluss in einem Netzteil am Eingang jeder Entkopplungsstrecke zu erfassen und den entsprechenden Strompfad abzuschalten indem das steuerbare Halbleiterbauelement in dem jeweiligen Strompfad gesperrt wird.

Die Steuerungs- und Regelungseinrichtung ist mit dem Messelement und dem Stellglied eines jeden Strompfads verbunden und ist zum Regeln einer Strombalance zwischen den Strompfaden ausgebildet mittels Einstellen eines minimalen Widerstandswerts desjenigen Stellglieds, an dessen Eingang die kleinere Eingangsspannung anliegt.

Ein solches Redundanzmodul ermöglicht eine vorteilhafte Regulierung der Pfadströme und Spannungsabfälle jeder Entkopplungstrecke.

Die Messelemente und die Stellglieder können mit einer Steuerungs- und Regelungseinrichtung verbunden sein, die dazu ausgebildet ist, Strom, Spannung, und/oder Leistung zu regulieren.

Mit der vorliegenden Erfindung wird ein Redundanzmodul mit aktiven Entkopplungsstrecken bereitgestellt, mit denen die Ströme durch die Strompfade zwischen der jeweiligen Anzahl von Eingängen zu dem gemeinsamen Stromknoten am Ausgang des Redundanzmoduls regelbar sind, so dass der Gesamtstrom der am Ausgang des Redundanzmoduls bereitgestellt wird symmetrisch auf gleich große Pfadströme bzw. durch unterschiedlich vorgegebene Pfadströme verteilbar ist.

Die Steuerungs- und Regelungseinrichtung kann zum Beispiel in einem Mikrokontroller realisiert sein, welcher Digital-Analog-Wandler zum Ansteuern der Stellglieder und Erfassen von Messwerten umfasst.

Die Steuerungs- und Regelungseinrichtung kann ausgebildet sein, den Ausgangstrom auf die Strompfade symmetrisch oder auf Ströme mit definierten Verhältnissen zu verteilen.

Das Stellglied kann einen MOSFET und das Messelement ein Messwiderstand umfassen, wobei MOSFET und Messwiderstand eine Reihenschaltung im Strompfad der Entkopplungsstrecke bilden.

An einem Messwiderstand, der mit einem MOSFET in einer Entkopplungsstrecke eine Reihenschaltung bildet, ist über den Spannungsabfall der durch den Strompfad fließende Strom einer Entkopplungsstrecke bestimmbar, der als Parameter für eine Stromregelung dient. Durch eine solche Strommessung kann im Strompfad vorteilhafter Weise ein niederohmiger Messwiderstand als Messelement verwendet werden, so dass die in der Entkopplungsstrecke abfallende Verlustleistung gering ist.

Alternativ zu einem ohmschen Messwiderstand kann auch eine mit dem MOSFET in Reihe geschalteten Diode zum Erfassen des Pfadstroms in der Entkopplungsstrecke eingesetzt werden. Ebenso ist eine induktive Strommessung möglich.

Anstelle einer Strommessung kann im Rahmen der Erfindung auch die Spannung am Ausgang eines jeweiligen Stellgliedes erfasst werden, so dass das Stellglied Spannungsgeregelt ansteuerbar ist.

Grundsätzlich kommen als Stellglieder auch andre steuerbare Halbleiterbauelemente z.B. IGBT oder Bipolartransistoren in Betracht.

In dem Redundanzmodul kann zu dem MOSFET jeder Entkopplungsstrecke eine Diode parallel geschaltet sein, um den Transistor vor Überströmen zu schützen, die zum Beispiel durch einen Kurzschluss am Ausgang des Redundanzmoduls hervorgerufen werden können.

Bevorzugt könnte dem Messelement jeder Entkopplungsstrecke ein Messverstärker zugeordnet sein. Mit dem Messverstärker können geringste Spannungsdifferenzen am Messwiderstand erfasst und für die Steuerungs- und Regelungseinrichtung aufbereitet werden. Dies ermöglicht die Verwendung äußerst niederohmiger Messwiderstände für eine weitere Reduzierung von Verlustleistungen in einer Entkopplungsstrecke.

Die Entkopplungsstrecken können zusätzlich Messelemente zur Überwachung der Temperatur und der Eingangsspannung umfassen, die mit der Regeleinrichtung verbunden sind. Die Entkopplungsstrecken sind somit durch die Steuerungs- und Regelungseinrichtung überwachbar.

Das Redundanzmodul ist durch seine Regelungseinrichtung dazu ausgebildet, einen Ausfall oder einen Kurzschluss in einem Netzteil am Eingang jeder der Entkopplungsstrecken zu erfassen und einen betroffenen Strompfad abzuschalten, indem der Transistor in dem jeweiligen Strompfad gesperrt wird.

Durch eine solche aktive Entkopplung von eingangsseitigen Kurzschlüssen kann mit der vorliegenden Erfindung auf eine Entkopplungsdiode in den jeweiligen Strompfaden verzichtet werden.

Selbstverständlich kann anstelle der aktiven Entkopplung weiterhin eine Kurzschlussstromentkopplung über eine Schottky-Diode vorgesehen sein.

Die Steuerungs- und Regelungseinrichtung eines Redundanzmoduls kann eine Anzahl digitaler und/oder analoger Schnittstellen umfassen, die zur Diagnose, Programmierung und Parametrierung sowie zur Kommunikation mit anderen Steuerungs- und Regelungseinrichtung einer Anlage, Maschine oder Geräts ausgebildet sind.

Somit können beispielsweise Ausfälle einzelner redundanter Netzteile oder drohende thermische Überlastung einer Entkopplungsstrecke Signalisiert werden, so dass eine Anlage, Maschine oder Gerät gegebenenfalls in einen sicheren Zustand überführt werden können.

Ein Redundanzmodul kann wenigstens ein zweites Redundanzmodul zum Ausgang parallel geschaltet haben, wobei die parallel geschalteten Redundanzmodule ausgebildet sind, miteinander zu kommunizieren und eine gemeinsame Reglung für eine symmetrische oder definierte Stromverteilung auf alle Entkopplungsstrecken bereitzustellen.

Die Erfindung ermöglicht somit eine dezentrale redundant ausgelegte Stromeinspeisung durch eine gemeinsame Sammelschiene bzw. Versorgungsleitung, wobei durch die Kommunikation der Steuerungs- und Regelungseinrichtungen eine symmetrische Verteilung der Ströme bzw. der Leistung auf alle Netzteile möglich ist. Dieses ist insbesondere bei Nachrüstungen zusätzlicher Netzteile vorteilhaft.

Die Erfindung umfasst des Weiteren ein Verfahren zum Bereitstellen einer redundanten Spannungsversorgung mit wenigsten zwei Netzteilen und einem Redundanzmodul zur Entkopplung von Kurzschlussströmen in der Spannungsversorgung, umfassend wenigsten zwei Netzteile, den Netzteilen entsprechende Eingänge, und eine Regelungseinrichtung, wobei die Eingänge jeweils über separate Strompfade auf einen gemeinsamen Stromknoten eines Ausgangs zum Bereitstellen eines Ausgangstroms geführt sind, und wobei jeder der Strompfade eine Entkopplungsstrecke bildet, der wenigstens ein Messelement zum Messen einer Eingangsspannung und eines Pfadstroms sowie ein als ein steuerbares Halbleiterbauelement ausgebildetes Stellglied zugeordnet sind.

Das Verfahren umfasst die folgenden Schritte:
(a) Erfassen der an den Entkopplungsstrecken anliegen Eingangsspannungen;
(b) Deaktivieren der Stellglieder in den Entkopplungsstrecken, an denen keine Spannung anliegt, indem das steuerbare Halbleiterbauelement in dem jeweiligen Strompfad gesperrt wird;
(c) Einstellen des Stellgliedes im Strompfad der Entkopplungsstrecke, an der die kleinste positive Eingangsspannung bereitgestellt wird, auf einen minimalen Widerstandswert;
(d) Erfassen von Messwerten der Pfadströme, Spannungen und/oder Leistungen in allen Entkopplungsstrecken;
(e) Regeln der Stellglieder der wenigstens einen weiteren Entkopplungsstrecke, wobei für eine jeweilige Regelung mindestens einer der Messwerte der Entkopplungsstrecke, an der die kleinste Eingangsspannung anliegt, den Sollwert bildet.

Das Stellglied kann in Abhängigkeit des durch die Entkopplungsstrecke fließenden Stromes geregelt werden.

Der absolute Wert für den Strom durch jeden der geregelten Strompfade ergibt sich aus dem gesamt Strom, der durch den Ausgang zur angeschlossenen Last fließt.

Der Strompfad der Entkopplungsstrecke, an dem die geringste Eingangsspannung festgestellt wurde, wird nicht geregelt, so dass der entsprechende Pfadstrom als Bezugsgröße für den Sollwert jeder Regelung des wenigstens einen weiteren Stromfades zugeführt werden kann. Mit dem Ausregeln der Regelabweichungen stellt sich ein Stromgleichgewicht zwischen den Pfaden ein.

Alternativ wird das Stellglied in Abhängigkeit seiner Ausgangsspannung geregelt.

Mit dem Verfahren kann die Eingangsspannungen an den Eingängen des Redundanzmoduls kontinuierlich überwacht werden, so dass bei Ausfall oder Kurzschluss eines Netzteils die zugeordnete Entkopplungsstrecke abgeschaltet wird. Somit kann diese aus der Regelung herausgenommen werden, so dass die Anlage, die Maschine oder das Gerät durch die in der Regelung verbleibenden Netzteile die Versorgung aufrecht erhalten.

Die Erfindung wird nachfolgend anhand einer beispielhaften Ausführungsform unter Bezugnahme der beigefügten Zeichnungen detailliert beschrieben. In den Zeichnungen zeigen:
- Fig. 1:: eine Funktionsweise eines Redundanzmoduls mit zwei Entkopplungsstrecken mit veränderbaren Widerständen;
- Fig. 2:: eine erste Ausführungsform eines Redundanzmoduls mit zwei parallel geschalteten Entkopplungsstrecken, die jeweils eine Entkopplungsdiode und einen Ansteuerbaren bzw. Regelbaren MOSFET enthalten;
- Fig. 3:: eine zweite Ausführungsform eines Redundanzmoduls mit zwei Entkopplungsstrecken, wobei zu den MOSFET jeweils eine Diode parallel geschaltet ist;
- Fig. 4:: eine dritte bevorzugte Ausführungsform eines Redundanzmoduls mit zwei Entkopplungsstrecken mit Ansteuerbar bzw. Regelbaren MOSFET ohne in Reihe geschaltete Entkopplungsdioden;
- Fig. 5:: ein vollständiges Redundanzmodul mit zwei parallel arbeitenden Entkopplungsstrecken sowie einer Steuerungs- und Regelungseinheit.

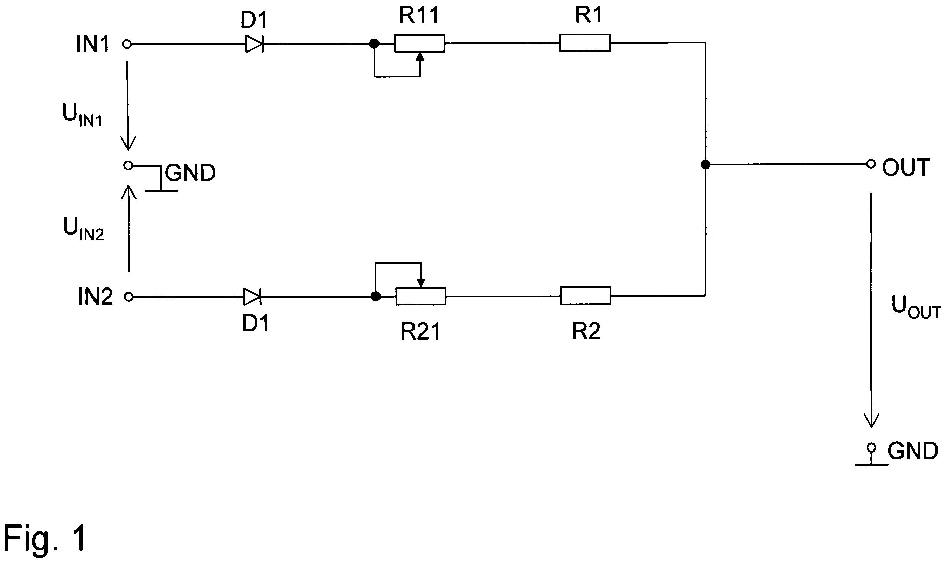

Anhand der Figur 1 kann die Funktionsweise eines Redundanzmoduls mit zwei Entkopplungsstrecken erläutert werden. Zwei in der Figur nicht dargestellte Netzteile werden sekundärseitig mit den Eingängen IN1 und IN2 des Redundanzmoduls verbunden und stellen die Spannungen U1 und U2 an den Eingängen der Strompfade bereit. Eine ebenfalls in der Figur nicht dargestellte Last, die durch das Redundanzmodul gespeist werden soll, ist an dem Ausgang OUT der Schaltung anschließbar. Der Ausgang bildet einen gemeinsamen Stromknoten für die Ausgänge der Stromfade aller Entkopplungsstrecken. Das Bezugspotential GND ist mit den entsprechenden Anschlüssen der Netzteile verbunden.

Die Dioden D1 und D2 sind Entkopplungsdioden, die bei einem Kurzschluss eines Eingangs einen Rückstrom von dem Ausgang OUT des Redundanzmoduls zu dem kurzgeschlossenen Eingang verhindern sollen.

Die veränderbaren Widerstände R11 und R21 stellen beispielhaft die Stellglieder der Regelkreise dar, mit denen die Strombalance zwischen den Strompfaden der speisenden Netzteile geregelt werden kann. Die Pfadströme werden jeweils über einen Messwiderstand R1 und R2 gemessen.

Zur Regelung der Strombalance wird der veränderbare Widerstand in einem ersten Strompfad, d.h. dem Strompfad, an dessen Eingang die kleiner Eingangsspannung anliegt, auf den minimalen Widerstandwert eingestellt. Der veränderbare Widerstand in einem zweiten Strompfad, d.h. dem anderen der beiden dargestellten Strompfade, ist das aktive Stellglied einer Regelung, mit dem die Strombalance geregelt wird. Die gemessenen Ströme beider Strompfade werden einer Regeleinrichtung zugeführt, wobei der Strom des Pfades mit der kleineren Eingangsspannung den Sollwert für die Regelung des zweiten Strompfades bildet.

In Abhängigkeit der Regelabweichung, die sich aus der Differenz zwischen dem ersten und dem zweiten Pfadstrom ergibt, wird der Wert des aktiven veränderbaren Widerstands im zweiten Strompfad solange variiert, bis beide Ströme aneinander angeglichen sind. Durch den Regelvorgang werden stets beide Pfadströme beeinflusst, da sich die Summe der beiden Pfadströme aus dem Gesamtstrom durch den Ausgang der Schaltung ergibt, der von der angeschlossenen Last vorgegeben wird und zumindest abschnittsweise zeitlich konstant ist.

Die vorliegende Erfindung ermöglicht auch den parallelen Betrieb von drei oder mehr Netzteilen, in dem jeweils der Pfadstrom einer Entkopplungsstrecke, an der das Netzteil mit der kleinsten Ausgangsspannung angeschlossen ist, als Sollwert den Regelkreisen für die weiteren Strompfade festgelegt wird. Da die Summe aller Pfadströme durch die Last am Ausgang vorgegeben ist, werden alle Strompfade mit einer symmetrische Strombelastung aufeinander ausbalanciert.

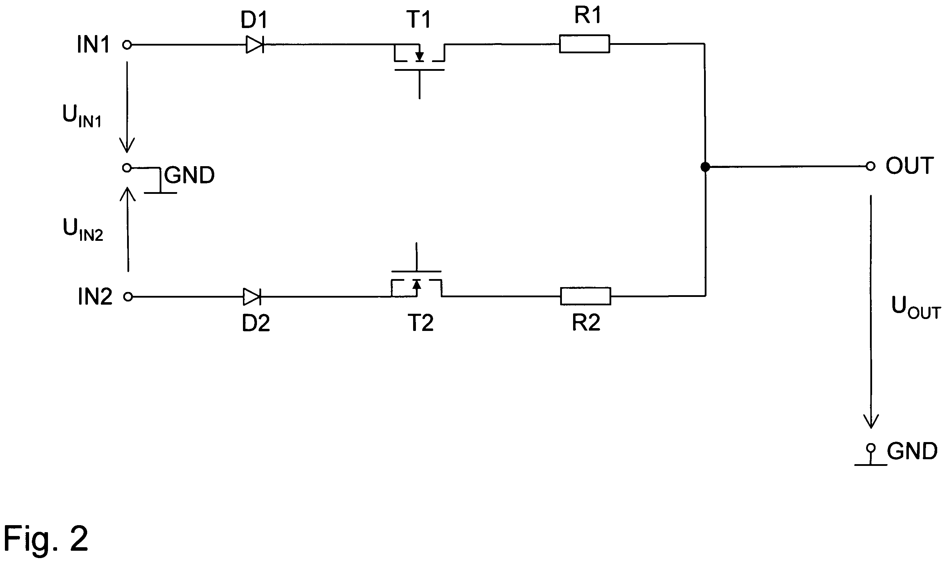

In der Figur 2 ist eine erste Ausführungsform von zwei parallelen Entkopplungsstrecken dargestellt. Die Dioden D1 und D2 sind bevorzugt als Schottky-Dioden ausgeführt, die sich durch eine geringe Durchlassspannung von etwa 400 mV auszeichnen und somit gegenüber Siliziumdioden geringere Leistungsverluste in den Strompfaden hervorrufen. Die veränderbaren Widerstände sind als MOS-Transistoren T1 und T2 dargestellt, die im Linearbetrieb arbeiten. Mit einer darstellungsgemäßen Schaltung können große Unterschiede in den Ausgangsspannungen der angeschlossenen Netzteile ausgeglichen werden.

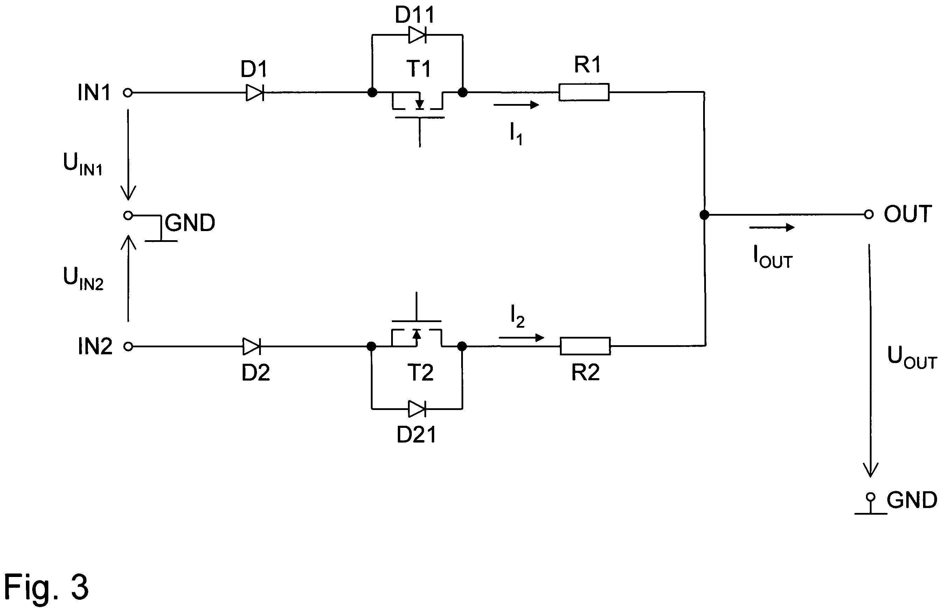

Die Figur 3 zeigt eine weitere Ausführungsform eines Redundanzmoduls mit zwei parallel geschalteten Entkopplungsstrecken. Die Transistoren T1 und T2 weisen gegenüber der Darstellung in Figur 2 jeweils zusätzlich eine parallel geschaltete Diode D11 und D21 auf. Diese dienen dem Schutz vor Überströmen, z.B. für den Fall eines Kurzschlusses am Ausgang des Redundanzmoduls. Sobald die zwischen Drain und Source des MOSFETs abfallende Spannung die Durchlassspannung einer jeweiligen Diode übersteigt, so kann diese den Pfadstrom übernehmen und den Transistor vor einem Durchbruch schützen. Bevorzug werden für die Dioden D11 und D21 Schottky-Dioden verwendet. In diesen Fall können Spannungsunterschiede in den Netzteilen von bis zu 400 mV durch die Regelung der Pfadströme ausgeglichen werden.

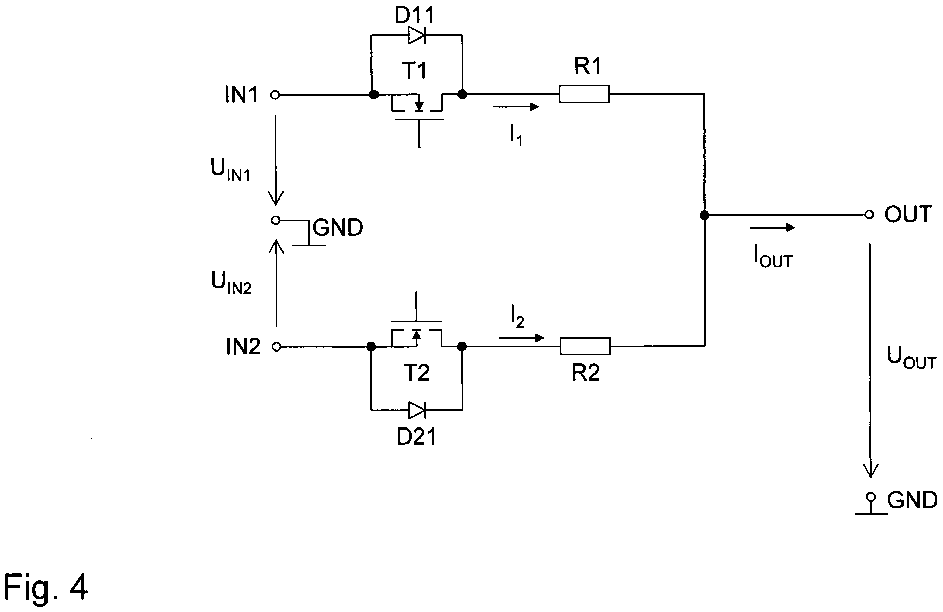

In Figur 4 ist eine besonders bevorzugte Ausführungsform zweier parallel geschalteter Entkopplungsstrecken für ein Redundanzmoduls mit symmetrisch regelbaren Pfadströmen dargestellt. Ein besonderer Vorteil an einem erfindungsgemäßen Redundanzmodul ist, dass prinzipiell auf die Entkopplungsdioden herkömmlicher Redundanzmodule verzichtet werden kann. Wie im Weitern beschrieben werden wird, ist die Steuerungs- und/oder Regeleinrichtung eines erfindungsgemäßen Redundanzmoduls mit Mitteln versehen, die eine Überwachung der Eingangsspannungen ermöglichen. Bei einem eingangsseitigen Kurzschluss, der z.B. in einem der Netzteile hervorgerufen wird, kann der zugeordnete Strompfad mit dem jeweiligen Transistor abgeschaltet werden, so dass ein Rückfließen des Ausgangsstromes aus dem Stromknoten aktiv unterdrückt wird. Die zu den MOSFET parallel geschalteten Dioden D12 und D21 ermöglichen einen Notbetrieb des Redundanzmoduls für den Fall, dass die Regeleinrichtung und/oder die Transistoren ausfallen.

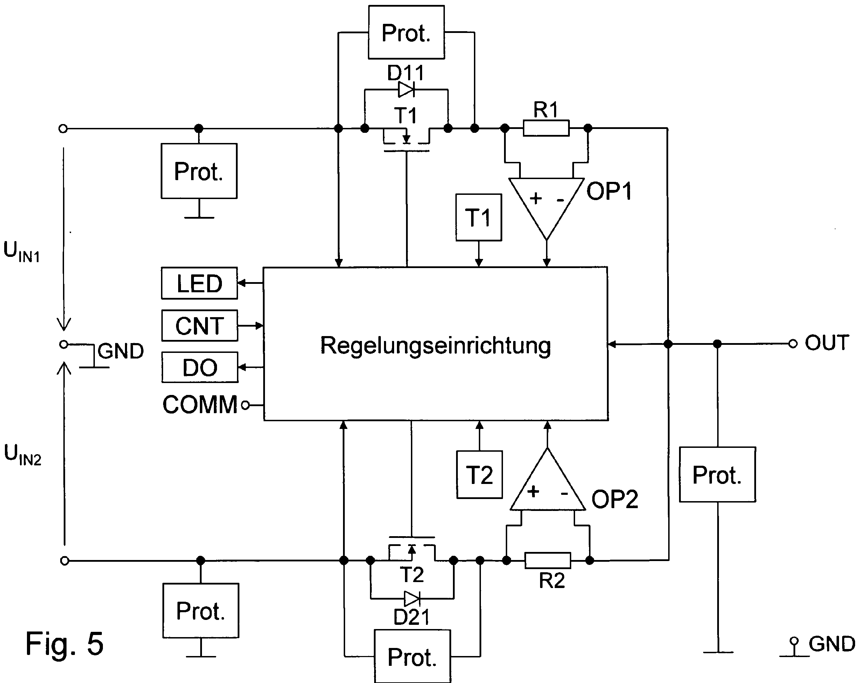

Die Figur 5 zeigt ein vollständiges Redundanzmodul mit zwei parallel arbeitenden Entkopplungsstrecken und einer mit diesen Modulen in Verbindung stehenden Steuerungs- und Regelungseinrichtung. Die Regelungseinrichtung ist z.B. durch einem Mikrokontrollerbaustein und zugehöriger Peripherie implementiert, und stellt neben der Stromregelung für die Strompfade zahlreiche Ein-/Ausgabe- Schnittstellen bereit. Diese umfassen beispielsweise die Leuchtdioden LED, die zu Diagnosezwecken und zur Anzeige von Betriebsarten, Warnungen, Alarmen und Fehlern dienen, Bedienelemente CNT z.B. zum Einstellen eine Betriebsart oder digitale Ausgänge DO, die mit Relaiskontakten oder elektronischen Treibern realisiert werden. Über die Schnittstelle COMM kann das Redundanzmodul mit übergeordneten Steuerungen von Anlagen, Geräten oder Maschinen kommunizieren.

Die Entkopplungsstrecken entsprechen im Wesentlichen denen, die in der Figur 4 bereits beschrien worden sind, und umfassen jeweils einen MOSFET T1 bzw. T2 mit einer parallel geschalteten Schottky-Diode D11 bzw. D21 und einen in Reihe geschalteten niederohmigen Messwiderstand. Jeder Entkopplungsstrecke ist ein Temperaturfühler zugeordnet, mit denen die MOSFET zu Diagnosezwecken überwacht werden können. Die Messwiderstände verfügen zur Verstärkung der gemessenen Spannungsdifferenz, die im linearen Zusammenhang mit dem jeweiligen Pfadstrom durch den Widerstand korrespondiert, über einen parallel geschalteten Messverstärker OP1 bzw. OP2.

Eingangsseitig ist an jeder der Entkopplungsstrecken ein Spannungsabgriff vorgesehen, mit der die Eingangsspannung jedes Strompfades von dem Mikrokontroller der Regeleinrichtung erfassbar ist.

Die Eingänge und der Ausgang des Redundanzmoduls kann optional mit einer Schutzschaltung RPOT beschaltet werden, die z.B. Entstörfilter und/oder Überspannungsfilter beinhalten. Die Transistoren der Strompfade können ebenso mit derartigen Schutzschaltungen beschaltet werden.

Die beiden Eingangsspannungen U1 und U2 werden zur Initiierung der Regelung für eine symmetrische Stromverteilung auf die beiden redundanten Netzteile benötigt. Dazu werden zunächst die von den Netzteilen bereitgestellten Spannungen an den Eingängen des Redundanzmoduls abgegriffen und der Regelungseinrichtung zugeführt.

Mit den Spannungen U1 und U2 kann die Funktionsfähigkeit der angeschlossenen Netzteile durch die Regelungseinrichtung überprüft werden. Fällt eine der Spannungen auf das Bezugspotential ab, oder zumindest unter einen festgelegten Schwellwert, so kann der in dem entsprechenden Strompfad zugeordnete Transistor gesperrt werden. Die Regelungseinrichtung wertet diesen Strompfad nicht als den Strompfad mit der kleinsten Eingangsspannung. Die Bezugsgröße für die Regelung wird durch den Strompfad bereitgestellt, der die kleinste gültige Eingangsspannung aufweist. Führt nur noch ein Strompfad den Gesamtstrom, so werden alle Strompfade mit ausgefallener Eingangsspannung abgeschaltet und das Stellglied des Pfades, der den Strom führt, wird auf einen minimalen Widerstandswert eingestellt.

## Patentansprüche

1. Redundanzmodul zur Entkopplung von Kurzschlussströmen in einer redundanten Spannungsversorgung mit
wenigsten zwei Netzteilen, einer Anzahl von Eingängen (IN1, IN2), die wenigstens der Anzahl der Netzteile entspricht, und einer Steuerungs- und Regelungseinrichtung,
wobei die Eingänge (IN1, IN2) jeweils über einen separaten Strompfad auf einen gemeinsamen Stromknoten eines Ausgangs (OUT) zum Bereitstellen eines Ausgangstromes geführt sind,
wobei jeder der Strompfade eine Entkopplungsstrecke bildet, der wenigstens ein Messelement (R1, R2) zum Messen der Eingangsspannung (UIN1, UIN2) und eines durch den Strompfad fließenden Pfadstroms sowie ein als ein steuerbares Halbleiterbauelement ausgebildetes Stellglied (R11,R21, T1,T2) zur Regulierung von Spannung, und/oder Pfadstrom der Entkopplungsstrecke zugeordnet sind,
**gekennzeichnet dadurch, dass**
die Steuerungs- und Regelungseinrichtung dazu ausgebildet ist, einen Kurzschluss in einem Netzteil am Eingang (IN1, IN2) jeder Entkopplungsstrecke zu erfassen und den entsprechenden Strompfad abzuschalten indem das steuerbare Halbleiterbauelement in dem jeweiligen Strompfad gesperrt wird, und
die Steuerungs- und Regelungseinrichtung mit dem Messelement (R1, R2) und dem Stellglied (R11,R21, T1,T2) eines jeden Strompfads verbunden ist und zum Regeln einer Strombalance zwischen den Strompfaden ausgebildet ist mittels Einstellen eines minimalen Widerstandswerts desjenigen Stellglieds, an dessen Eingang (IN1, IN2) die kleinere Eingangsspannung (UIN1, UIN2) anliegt.

2. Redundanzmodul gemäß vorstehendem Anspruch, **dadurch gekennzeichnet, dass** die Steuerungs- und Regelungseinrichtung dazu ausgebildet ist, Leistung zu regulieren.

3. Redundanzmodul gemäß vorstehendem Anspruch, **dadurch gekennzeichnet, dass** die Steuerungs- und Regelungseinrichtung ausgebildet ist, den Ausgangstrom auf die Strompfade symmetrisch zu verteilen oder eine definierte Stromverteilung auf den Strompfaden bereitzustellen.

4. Redundanzmodul gemäß vorstehendem Anspruch, **dadurch gekennzeichnet, dass** das Stellglied einen MOSFET (T1, T2) und das Messelement einen Messwiderstand (R1, R2) umfasst, wobei MOSFET (T1, T2) und Messwiderstand (R1, R2) eine Reihenschaltung im Strompfad der Entkopplungsstrecke bilden.

5. Redundanzmodul gemäß vorstehendem Anspruch, **dadurch gekennzeichnet, dass** zu dem MOSFET (T1, T2) jeder Entkopplungsstrecke eine Diode (D11, D21) parallel geschaltet ist.

6. Redundanzmodul gemäß einem der vorstehenden Ansprüche, **dadurch gekennzeichnet, dass** dem Messelement (R1, R2) jeder Entkopplungsstrecke ein Messverstärker (Op1, Op2) zugeordnet ist.

7. Redundanzmodul gemäß einem der vorstehenden Ansprüche, **dadurch gekennzeichnet, dass** jede Entkopplungsstrecke eine Entkopplungsdiode (D1, D2) umfasst, die mit dem jeweiligen Stellglied und dem Messelement in Reihe geschaltet ist.

8. Redundanzmodul gemäß einem der vorstehenden Ansprüche, **dadurch gekennzeichnet, dass** die Entkopplungsstrecken Messelemente zur Überwachung der Temperatur des jeweiligen Stellglieds einer Entkopplungsstrecke umfassen, wobei die Messelemente mit der Steuerungs- und Regelungseinrichtung verbunden sind.

9. Redundanzmodul gemäß einem der vorstehenden Ansprüche, **dadurch gekennzeichnet, dass** die Steuerungs- und Regelungseinrichtung eine Anzahl digitaler und/oder analoger Schnittstellen umfasst, die zur Diagnose, Programmierung und Parametrierung sowie zur Kommunikation mit anderen Steuerungs- und Regelungseinrichtung einer Anlage, Maschine oder Geräts ausgebildet sind.

10. Redundanzmodul gemäß vorstehendem Anspruche, **dadurch gekennzeichnet, dass** wenigstens ein zweites Redundanzmodul zum Ausgang parallel geschaltet ist, wobei die parallel geschalteten Redundanzmodule ausgebildet sind, miteinander zu kommunizieren und eine gemeinsame Reglung für eine symmetrische oder definierte Stromverteilung auf alle Entkopplungsstrecken bereitzustellen.

11. Verfahren zum Bereitstellen einer redundanten Spannungsversorgung mit
wenigsten zwei Netzteilen und einem Redundanzmodul zur Entkopplung von Kurzschlussströmen in der Spannungsversorgung, umfassend wenigsten zwei Netzteile, den Netzteilen entsprechende Eingänge (IN1, IN2), und eine Regelungseinrichtung, wobei die Eingänge (IN1, IN2) jeweils über separate Strompfade auf einen gemeinsamen Stromknoten eines Ausgangs (OUT) zum Bereitstellen eines Ausgangstroms geführt sind, und wobei jeder der Strompfade eine Entkopplungsstrecke bildet, der wenigstens ein Messelement (R1, R2) zum Messen einer Eingangsspannung (UIN1, UIN2) und eines Pfadstroms sowie ein als ein steuerbares Halbleiterbauelement ausgebildetes Stellglied (R11,R21, T1,T2) zugeordnet sind,
das Verfahren umfassend folgende Schritte:
(a) Erfassen der an den Entkopplungsstrecken anliegen Eingangsspannungen (UIN1, UIN2);
(b) Deaktivieren der Stellglieder in den Entkopplungsstrecken, an denen keine Spannung anliegt, indem das steuerbare Halbleiterbauelement in dem jeweiligen Strompfad gesperrt wird;
(c) Einstellen des Stellgliedes in der Entkopplungsstrecke, an der die kleinste positive Eingangsspannung (UIN1, UIN2) bereitgestellt wird, auf einen minimalen Widerstandswert;
(d) Erfassen von Messwerten der Ströme und Spannungen in allen Entkopplungsstrecken;
(e) Regeln der Stellglieder der wenigstens einen weiteren Entkopplungsstrecke, wobei für eine jeweilige Regelung mindestens einer der Messwerte der Entkopplungsstrecke, an der die kleinste Eingangsspannung (UIN1, UIN2) anliegt, den Sollwert bildet.

12. Verfahren gemäß Anspruch 11, **dadurch gekennzeichnet, dass** das Stellglied (R11,R21, T1,T2) in Abhängigkeit des durch die Entkopplungsstrecke fließenden Stromes geregelt wird.

13. Verfahren gemäß Anspruch 11, **dadurch gekennzeichnet, dass** das Stellglied in Abhängigkeit seiner Ausgangsspannung geregelt wird.

14. Verfahren nach vorstehendem Anspruch, **dadurch gekennzeichnet, dass** die Eingangsspannungen (UIN1, UIN2) an den Eingängen (IN1, IN2) des Redundanzmoduls kontinuierlich überwacht werden, so dass bei Ausfall oder Kurzschluss eines Netzteils der Strom durch die zugeordnete Entkopplungsstrecke abgeschaltet wird.

## Claims

1. A redundant module for decoupling short-circuit currents in a redundant voltage supply unit, comprising
at least two power supply units, a number of inputs (IN1, IN2) corresponding at least to the number of power supply units, and a control device;
wherein each input (IN1, IN2) is connected to a common current node of an output (OUT) for providing an output current via a separate current path;
wherein each of the current paths defines a decoupling section which has associated therewith at least one measuring element (R1, R2) for measuring the input voltage (UIN1, UIN2) and a path current flowing through the current path, and a control element (R11, R21, T1, T2) implemented as a controllable semiconductor component, for controlling the voltage and/or path current of the decoupling section;
**characterised in that**
the control device is adapted to detect a short-circuit in a power supply unit at the input (IN1, IN2) of each decoupling section and to switch off the corresponding current path by blocking the controllable semiconductor component in the respective current path; and
the control device is connected to the measuring element (R1, R2) and to the control element (R11, R21, T1, T2) of each current path and is adapted to control a current balance between the current paths by adjusting a minimum resistance value in the control element which has the lower input voltage (UIN1, UIN2) applied on the input (IN1, IN2) thereof.

2. The redundant module according to the preceding claim, **characterised in that** the control device is adapted for power regulation.

3. The redundant module according to the preceding claim, **characterised in that** the control device is adapted to symmetrically distribute the output current to the current paths, or to provide a defined current distribution on the current paths.

4. The redundant module according to the preceding claim, **characterised in that** the control element comprises a MOSFET (T1, T2) and the measuring element comprises a measuring resistor (R1, R2), wherein said MOSFET (T1, T2) and said measuring resistor (R1, R2) are connected in series in the current path of the decoupling section.

5. The redundant module according to the preceding claim, **characterised in that** the MOSFET (T1, T2) of each decoupling section has a diode (D11, D21) connected in parallel thereto.

6. The redundant module according to any one of the preceding claims, **characterised in that** the measuring element (R1, R2) of each decoupling section has a measurement amplifier (Op1, Op2) associated therewith.

7. The redundant module according to any one of the preceding claims, **characterised in that** each decoupling section comprises a decoupling diode (D1, D2) which is connected in series with the respective control element and the measuring element.

8. The redundant module according to any one of the preceding claims, **characterised in that** the decoupling sections comprise measuring elements for monitoring the temperature of the respective control element of a decoupling section, wherein the measuring elements are connected to the control device.

9. The redundant module according to any one of the preceding claims, **characterised in that** the control device comprises a number of digital and/or analog interfaces adapted for diagnosis, programming, and parameterization, and for communication with other control devices of a system, machine, or device.

10. The redundant module according to the preceding claim, **characterised in that** at least a second redundant module is connected in parallel to the output, wherein the parallel-connected redundant modules are adapted to communicate with each other and to provide common control for a symmetrical or predefined current distribution to all decoupling sections.

11. A method for providing a redundant voltage supply unit with
at least two power supply units and a redundant module for decoupling short-circuit currents in the voltage supply unit, comprising at least two power supply units, inputs (IN1, IN2) corresponding to the power supply units, and a control device, wherein each of the inputs (IN1, IN2) is connected to a common current node of an output (OUT) for providing an output current via a respective separate current path, and wherein each of the current paths defines a decoupling section which has associated therewith at least one measuring element (R1, R2) for measuring an input voltage (UIN1, UIN2) and a path current, and a control element (R11, R21, T1, T2) implemented as a controllable semiconductor component;
the method comprising the steps of:
(a) capturing the input voltages (UIN1, UIN2) applied at the decoupling sections;
(b) disabling the control elements in those decoupling sections at which no voltage is applied, by blocking the controllable semiconductor component in the respective current path;
(c) adjusting, to a minimum resistance value, the control element in the decoupling section at which the lowest positive input voltage (UIN1, UIN2) is provided;
(d) capturing current and voltage measurement values in all decoupling sections;
(e) closed-loop controlling the control elements of the at least one further decoupling section, wherein at least one of the measured values of the decoupling section at which the lowest input voltage (UIN1, UIN2) is applied defines the target value for a respective closed-loop control.

12. The method according to claim 11, **characterised in that** the control element (R11, R21, T1, T2) is closed-loop controlled on the basis of the current flowing through the decoupling section.

13. The method according to claim 11, **characterised in that** the control element is closed-loop controlled on the basis of its output voltage.

14. The method according to the preceding claim, **characterised in that** the input voltages (UIN1, UIN2) at the inputs (IN1, IN2) of the redundant module are monitored continuously, so that in case of failure or short-circuit of a power supply unit the current through the associated decoupling section is switched off.

## Revendications

1. Module redondant destiné au découplage de courants de court-circuit, comprenant
au moins deux blocs d'alimentation, un nombre d'entrées (IN1, IN2) qui correspond au moins au nombre de blocs d'alimentation, et un dispositif de commande et de régulation,
les entrées (IN1, IN2) étant reliées respectivement via un trajet de courant séparé à un nœud électrique commun d'une sortie (OUT), en vue de la délivrance d'un courant de sortie,
chacun des trajets de courant constituant une section de découplage à laquelle sont associés au moins un élément de mesure (R1, R2), destiné à mesurer la tension d'entrée (UIN1, UIN2) et un courant de trajet circulant sur le trajet de courant, ainsi qu'un élément de régulation (R11, R21, T1, T2), réalisé sous forme de composant semi-conducteur commandable, destiné à réguler la tension et/ou le courant de trajet de la section de découplage,
**caractérisé en ce que**
le dispositif de commande et de régulation est conçu pour détecter un court-circuit dans un bloc d'alimentation à l'entrée (IN1, IN2) de chaque section de découplage et pour mettre hors circuit le trajet de courant respectif, en bloquant le composant semi-conducteur commandable dans le trajet de courant respectif, et
le dispositif de commande et de régulation est relié à l'élément de mesure (R1, R2) et à l'élément de régulation (R11, R21, T1, T2) de chaque trajet de courant et est conçu pour réguler un équilibre de courant entre les trajets de courant par le biais du réglage d'une valeur de résistance minimale de l'élément de régulation à l'entrée (IN1, IN2) duquel est appliquée la plus petite tension d'entrée (UIN1, UIN2).

2. Module redondant selon la revendication précédente, **caractérisé en ce que** le dispositif de commande et de régulation est conçu pour réguler une puissance.

3. Module redondant selon la revendication précédente, **caractérisé en ce que** le dispositif de commande et de régulation est conçu pour répartir le courant de sortie de façon symétrique sur les trajets de courant ou pour fournir une répartition de courant définie sur les trajets de courant.

4. Module redondant selon la revendication précédente, **caractérisé en ce que** l'élément de régulation comprend un MOSFET (T1, T2) et l'élément de mesure comprend une résistance de mesure (R1, R2), le MOSFET (T1, T2) et la résistance de mesure (R1, R2) constituant un montage en série dans le trajet de courant de la section de découplage.

5. Module redondant selon la revendication précédente, **caractérisé en ce qu'**une diode (D11, D21) est montée en parallèle avec le MOSFET (T1, T2) de chaque section de découplage.

6. Module redondant selon l'une des revendications précédentes, **caractérisé en ce qu'**un amplificateur de mesure (Op1, Op2) est associé à l'élément de mesure (R1, R2) de chaque section de découplage.

7. Module redondant selon l'une des revendications précédentes, **caractérisé en ce que** chaque section de découplage comprend une diode de découplage (D1, D2) qui est montée en série avec l'élément de régulation respectif et avec l'élément de mesure.

8. Module redondant selon l'une des revendications précédentes, **caractérisé en ce que** les sections de découplage comprennent des éléments de mesure pour surveiller la température de l'élément de régulation respectif d'une section de découplage, les éléments de mesure étant reliés au dispositif de commande et de régulation.

9. Module redondant selon l'une des revendications précédentes, **caractérisé en ce que** le dispositif de commande et de régulation comprend un certain nombre d'interfaces numériques et/ou analogiques qui sont conçues pour le diagnostic, la programmation et le paramétrage ainsi que pour la communication avec d'autres dispositifs de commande et de régulation d'une installation, d'une machine ou d'un appareil.

10. Module redondant selon l'une des revendications précédentes, **caractérisé en ce qu'**au moins un deuxième module redondant est monté en parallèle avec la sortie, les modules redondants branchés en parallèle étant conçus pour communiquer entre eux et fournir une régulation commune pour une répartition définie du courant sur toutes les sections de découplage.

11. Procédé de mise à disposition d'une alimentation en courant redondante, comprenant
au moins deux blocs d'alimentation et un module redondant pour le découplage de courants de court-circuit dans l'alimentation en tension, comportant au moins deux blocs d'alimentation, des entrées (IN1, IN2) correspondant aux blocs d'alimentation, et un dispositif régulation, les entrées (IN1, IN2) étant reliées respectivement via des trajets de courant séparés à un nœud électrique commun d'une sortie (OUT), en vue de la délivrance d'un courant de sortie, et chacun des trajets de courant constituant une section de découplage à laquelle sont associés au moins un élément de mesure (R1, R2), destiné à mesurer une tension d'entrée (UIN1, UIN2) et un trajet de courant, ainsi qu'un élément de régulation (R11, R21, T1, T2) réalisé sous forme de composant semi-conducteur commandable,
le procédé comprenant les étapes suivantes :
(a) recueil des tensions d'entrée (UIN1, UIN2) appliquées aux sections de découplage ;
(b) désactivation des éléments de régulation dans les sections de découplage qui ne reçoivent pas de tension, en bloquant le composant semi-conducteur commandable dans le trajet de courant respectif ;
(c) réglage, à une valeur de résistance minimale, de l'élément de régulation dans la section de découplage sur laquelle est délivrée la plus petite tension d'entrée (UIN1, UIN2) positive ;
(d) recueil de valeurs mesurées des courants et des tensions dans toutes les sections de découplage ;
(e) réglage des éléments de régulation de la section de découplage supplémentaire, au nombre d'au moins une, sachant que pour une régulation respective, au moins une des valeurs mesurées de la section de découplage, à laquelle est appliquée la plus petite tension d'entrée (UIN1, UIN2), constitue la valeur de consigne.

12. Procédé selon la revendication 11, **caractérisé en ce que** l'élément de régulation (R11, R21, T1, T2) est réglé en fonction du courant circulant dans la section de découplage.

13. Procédé selon la revendication 11, **caractérisé en ce que** l'élément de régulation est réglé en fonction de sa tension de sortie.

14. Procédé selon la revendication précédente, **caractérisé en ce que** les tensions d'entrée (UIN1, UIN2) aux entrées (INI, IN2) du module redondant sont surveillées en continu, de sorte qu'en cas de défaillance ou de court-circuit d'un bloc d'alimentation, le courant est coupé par la section de découplage associée.
